# EUROPEAN PATENT APPLICATION

(11) **EP 4 822 798 A1**
(43) Date of publication of application: **14.10.2026**
(21) Application number: 26165956.9
(22) Date of filing: 19.03.2026
(51) Int. Cl.: H01M 10/0525, H01M 4/04, H01M 4/13, H01M 4/139, H01M 10/04, H01M 10/0587, H01M 50/474, H01M 50/477

(54) **ELECTRODE AND ELECTRODE ASSEMBLY INCLUDING THE SAME**

(30) Priority: 10.04.2025 KR 20250047059
(71) Applicant: SAMSUNG SDI CO., LTD., Yongin-si, Gyeonggi-do 17084 (KR)
(72) Inventor: BYEON, Junho, 17084 Yongin-si, Gyeonggi-do (KR); CHOI, Kyugil, 17084 Yongin-si, Gyeonggi-do (KR)
(74) Representative: Bardehle Pagenberg Partnerschaft mbB Patentanwälte Rechtsanwälte

(57) **Abstract**

An electrode includes a strip-shaped substrate extending in one direction, an active material layer formed on at least one side of the substrate, and a spacer including a plurality of protrusions in which the substrate and the active material layer are raised together.

## Description

### BACKGROUND

### (a) Field of the Disclosure

The present disclosure relates to an electrode for a rechargeable battery, and an electrode assembly including the electrode.

### (b) Description of the Related Art

A rechargeable battery is used for various purposes, such as power for small electronic devices such as, e.g., mobile phones and laptop computers, and power for driving motors of, e.g., electric vehicles and hybrid vehicles.

The rechargeable battery includes an electrode assembly, and a case accommodating and sealing the electrode assembly and an electrolyte in an inner space. The electrode assembly includes two electrodes (positive electrode and negative electrode) and a separator.

The electrode assembly may be manufactured into a stacked electrode assembly and a wound electrode assembly according to a shape, and among these electrode assemblies, the wound electrode assembly may be pressed after winding a strip-shaped electrode and a separator.

An electrode assembly, which is pressurized after winding, may be difficult to penetrate in the electrolyte due to close contact between the electrodes due to pressure.

In addition, in order to increase the output and capacity of rechargeable batteries, development is being carried out in the direction of increasing the energy density of the electrodes and loading level.

However, electrodes developed in this way may have the unintended side effect of reducing the impregnation property of the electrolyte. If (when) the impregnation property of the electrolyte in the electrode decreases, precipitation may begin in areas where the impregnation of the electrolyte is insufficient, which may reduce the life characteristics of the rechargeable battery.

### SUMMARY

The present disclosure describes an electrode capable of improving the impregnation property of an electrolyte, and thus enhancing the life characteristics, and an electrode assembly including the electrode.

The invention is defined by independent claims and various embodiments are disclosed in dependent claims, the description, and the drawings. The embodiments and/or examples of the following description, which are not covered by the claims, are provided for illustrative purpose only and are only intended to assist the reader in understanding the invention.

An electrode according to an example embodiment of the present disclosure includes a strip-shaped substrate extending in one direction, an active material layer formed on at least one side of the substrate, and a spacer having a plurality of protrusions in which the substrate and the active material layer are raised together.

The inside of one or more of the plurality of protrusions, such as embossing (EMBO), may be or include an empty space of which one side is open.

The planar shape of the protrusions may be circular or polygonal.

The diameter of the protrusions may be in a range from about 0.1 mm to about 6 mm, and the length of the diagonal of the protrusion may be in a range from about 0.1 mm to about 10 mm.

The protrusions may be hemispherical.

The protrusions may be or include a polygonal prism, and the corners and edges of the polygonal prism may have a curved surface.

The planar shape of the protrusions may be rectangle with a long length in one direction.

The width of the rectangle may be in a range from about 0.1 mm to about 10 mm.

The rectangles may be formed discontinuously along the one direction.

Ends of the protrusions adjacent to each other in the width direction of the rectangle may be shifted from each other.

The height of the protrusion may be half (D/2) or less of the diameter of the protrusion.

The spacing between the protrusions may be about 0.5 mm or more.

A plurality of spacers may be formed along one direction.

An electrode assembly according to another example embodiment of the present disclosure includes a separator, a first electrode and a second electrode which are positioned with the separator interposed therebetween and pressurized after being wound together with the separator. The first electrode includes a substrate, an active material layer formed on at least one side of the substrate, and a spacer formed by a plurality of protrusions formed by raising the substrate and the active material layer together.

The electrode assembly may have a pair of facing central portions and a pair of curved portions connecting ends of the central portion, respectively, and the spacer may be positioned in the curved portion.

The area of spacer may vary depending on the area of the curved portion.

The spacer may be formed on the entire, or substantially the entire, first electrode on which the active material layer is formed.

The inside of the protrusion may be or include an empty space of which one side is open.

At least one of a diameter, a height of protrusion, and a spacing between the protrusions positioned at the center of the electrode assembly may be different from a diameter, a height of a protrusion, and a spacing between the protrusions positioned in a relatively outward portion of the electrode assembly.

The second electrode may include a substrate, an active material layer formed on at least one side of the substrate, and a spacer formed of or including a plurality of protrusions formed by the substrate and the active material layer being raised together, and the spacer formed on the second electrode may be formed at the same position as the spacer formed on the first electrode.

A height of a protrusion formed in the first electrode may be different from the height of a protrusion formed in the second electrode.

In examples of the present disclosure, the spacer may be formed, the impregnation property of the electrolyte may be improved, and unnecessary precipitate may be reduced or suppressed. Accordingly, the rechargeable battery may have stable charge/discharge characteristics, thereby improving electrical characteristics such as long-term life characteristics.

### BRIEF DESCRIPTION OF THE DRAWINGS

The following drawings attached to the present specification illustrate example embodiments of the present disclosure and serve to further understand the technical idea of the present disclosure together with the detailed description of the disclosure to be described below, and thus the present disclosure should not be construed as being limited only to the matters set forth in the drawings.
FIG. 1 is a schematic plan view of an electrode according to an example embodiment of the present disclosure.
FIG. 2 is a cross-sectional view taken along line II-II' of FIG. 1.
FIG. 3 is a view for explaining a method of forming a spacer according to an example embodiment of the present disclosure.
FIG. 4 and FIG. 5 are schematic perspective views illustrating a portion of an electrode according to other example embodiments of the present disclosure.
FIG. 6 is a cross-sectional view taken along line VI-VI' of FIG. 5.
FIG. 7 to FIG. 11 are schematic plan views of electrodes according to other example embodiments of the present disclosure.
FIG. 12 is a schematic cross-sectional view of an electrode according to another example embodiment of the present disclosure.
FIG. 13 is a schematic cross-sectional view of an electrode assembly according to another example embodiment of the present disclosure.
FIG. 14 is an enlarged cross-sectional view of a portion of the electrode assembly of FIG. 13 according to another example embodiment of the present disclosure.
FIG. 15 is a photograph of a curved portion of an electrode assembly according to an example embodiment of the present disclosure.
FIG. 16 is an exploded perspective view of a rechargeable battery according to an example embodiment of the present disclosure.
FIG. 17 is a perspective view of a rechargeable battery according to an example embodiment of the present disclosure.
FIG. 18 is a cross-sectional view of the rechargeable battery illustrated in FIG. 17.
FIG. 19 is a photograph of an electrode assembly manufactured according to the related art.
FIG. 20 is a photograph of an electrode assembly manufactured according to the present disclosure.

### DETAILED DESCRIPTION

Hereinafter, example embodiments of the present disclosure are described in detail. However, the example embodiments are provided as examples, and the present disclosure is not limited thereby, and the present disclosure is defined only by the scope of the claims set forth below.

The terminology used herein is for the purpose of describing example implementations only, and is not intended to be limiting of the present disclosure. A singular expression includes a plurality of expressions unless the context clearly indicates otherwise.

Herein, the term " combination thereof " refers to a mixture of components, a laminate, a composite, a copolymer, an alloy, a blend, a reaction product, and the like.

It should be understood that the terms "include," "comprise," or "have" herein are intended to specify the presence of a feature, number, step, component, or a combination thereof, but do not preclude the possibility of the presence or addition of one or more other features, numbers, steps, components, or combinations thereof.

In the drawings, the thickness may be enlarged to clearly describe various layers and regions, and like reference numerals refer to like parts throughout the specification. When a part of a layer, film, region, plate, or the like is referred to as being "over" or "on" another part, this includes not only the case where the other part is "directly on," but also the case where there is another part therebetween. In contrast, when an element is referred to as being "directly on" another element, there are no intervening elements present.

In addition, the "layer" includes not only a shape formed on the entire surface, but also a shape formed on a partial surface when viewed in a plan view.

Unless otherwise specified in this specification, anything indicated in the singular may also include the plural. Additionally, unless otherwise stated, "A or B" may mean "including A, including B, or including A and B."

When the terms "about" or "substantially" are used in this specification in connection with a numerical value, it is intended that the associated numerical value include a tolerance of ±10% around the stated numerical value. When ranges are specified, the range includes all values therebetween such as increments of 0.1%.

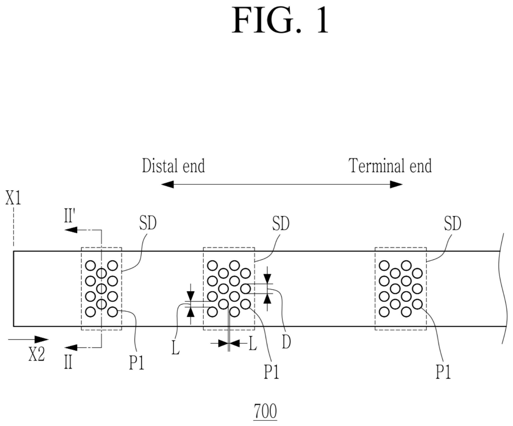

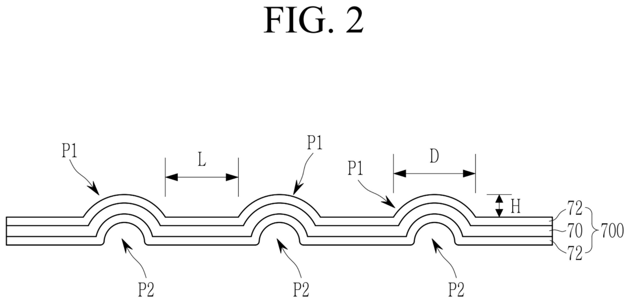

FIG. 1 is a schematic plan view of an electrode according to an example embodiment of the present disclosure, and FIG. 2 is a cross-sectional view taken along line II-II' of FIG. 1.

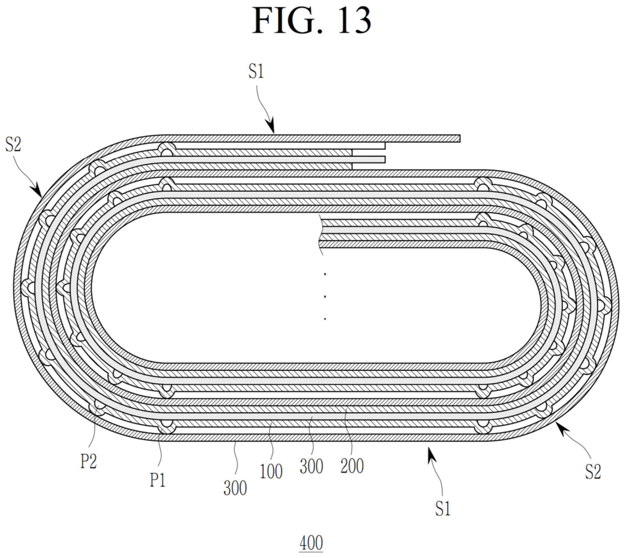

Referring to FIGS. 1 and 2, the electrode 700 according to an example embodiment of the present disclosure may be or include an electrode used in a wound electrode assembly (see FIG. 13) wound around a winding axis X1. The electrode 700 may be or include a strip-shaped electrode having a long length along the winding direction X2.

The electrode 700 includes a substrate 70 made of or including a metal foil, and an active material layer 72 formed on at least one surface of the substrate 70.

The electrode 700 includes a plurality of spacers SD which are spaced apart from each other in order to increase the impregnation property of the electrolyte. A spacer SD may be positioned at the curved portion S2 (see FIG. 13) of an electrode assembly to be described below. The spacer SD may be or include a region formed by connecting the outermost protrusions P1 to each other.

The area of the spacer SD may be equal to the area of the curved portion S2 described below, but is not limited thereto, and may be smaller or larger than the area of the curved portion S2 as long as the spacing between the overlapping electrodes in the curved portion can be maintained.

The spacer SD is a portion where the electrode 700 protrudes or has a concave shape compared to other portions and hereinafter, for convenience of explanation, the protruding shape is referred to as a protrusion P1 and the concave shape is referred to as a concave portion P2.

The protrusions P1 and the concave portions P2 may have the same position, and the inside of the protrusion P1 may have an empty space, and the empty space may be the concave portion P2. Instead of separately forming a protrusion and a concave portion on one surface of the electrode 700, the protrusion P1 may be deformed in an opposite direction as the sheet-shaped electrode 700 is raised and the electrode protrudes in one direction. Even without separately describing the concave portion, when the protrusion P1 is present, a concave portion P2 is formed on the opposite side thereof.

Referring to FIG. 1, the flat shape of the protrusion P1 may be circular, and the protrusion P1 may be arranged at a regular spacing L. When the protrusion is formed by the manufacturing method described below, the plurality of protrusions P1 may be placed at desired spacings so that the plurality of protrusions P1 can be readily deformed without interference with each other. In this case, the spacing L may be a distance separated in the direction of the winding axis X1 or the winding direction X2 of the electrode, and may be, for example, about 0.5 mm or more.

As shown in FIG. 2, the protrusion P1 may have a hemispherical cross-section. The size of the protrusion P1 positioned in one spacer SD, that is, the diameter D and the height H of the protrusion SD may be the same. In this case, the diameter D of the protrusion P1 may be in a range of about 0.1 mm to about 6 mm, and the height H may have a maximum value of half the diameter (D/2). For example, the height H may be about 3 mm or less.

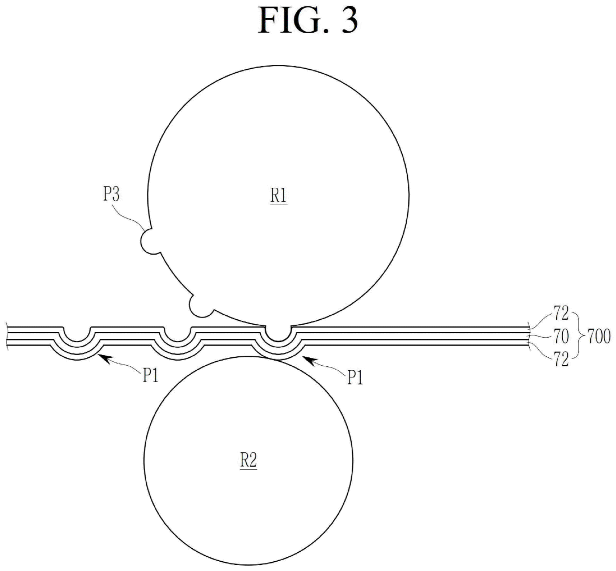

FIG. 3 is a view for explaining a method of forming a spacer according to an example embodiment of the present disclosure.

Referring to FIG. 3, an electrode 700 having an active material layer 72 formed thereon is prepared on a substrate 70. The electrode 700 may be provided in the form of being wound around a roll (not shown), and the electrode 700 may be pressed while passing between the first roller R1 and the second roller R2 facing each other.

A protruding pattern P3 protruding from a surface of the first roller R1 may be formed. The protruding pattern P3 may be variously formed according to the shape of the protrusion P1 to be formed, and for example, the protruding pattern P3 for forming the hemispherical protrusion P1 of FIG. 1 is a hemispherical shape in which the sphere is cut, and the height of the hemisphere may be 1/2 or less with respect to the diameter of the sphere including the hemisphere. If (when) the height of the protruding pattern P3 is high, the electrode may be torn or damaged due to pressing, and the height of the protruding pattern P3 may be in a range of about 1 mm to about 7 mm.

For example, when the protruding pattern P3 presses the electrode 700, the protruding pattern P3 makes contact and presses the electrode, thereby deforming the electrode concavely in the shape of the protruding pattern P3 to form a concave portion P2, and at the same time, the electrode protrudes to the opposite side to form a protrusion P1.

The second roller R2 may support the electrode 700 when pressing the electrode 700 passing between the first roller R1 and the second roller R2.

Accordingly, the first roller R1 may be made of or include a rigid material, such as a metal, so that the shape of the protruding pattern P3 is not deformed when pressurized. And the second roller R2 may have a surface that can be deformed according to the pressure applied by the first roller R1 and may be made of or include a material capable of supporting the electrode 700. For example, the second roller R2 may be formed of or include urethane having elasticity. When the hardness of the second roller R2 is low, the pressure applied to the electrode plate may be reduced, and the roller may be contaminated and affect the electrode plate, and thus the hardness of the second roller R2 may be in a range of about 35 to about 80.

The protrusion P1 forming the spacer SD described above may be formed in various spacings and shapes.

As shown in FIG. 1, the planar shape of the protrusion P1 may be circular, but the planar shape of the protrusion P1 is not limited thereto, and may be formed in, e.g., a polygonal and a linear shape.

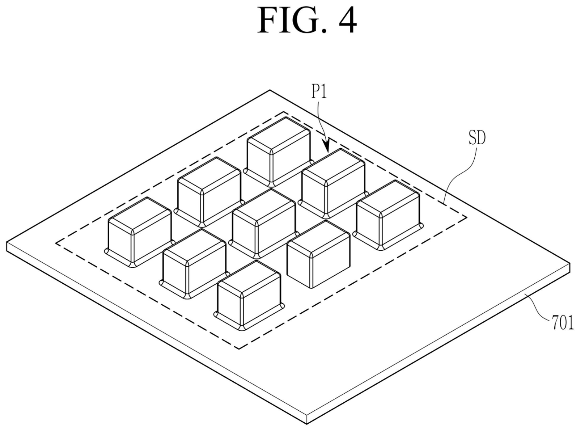

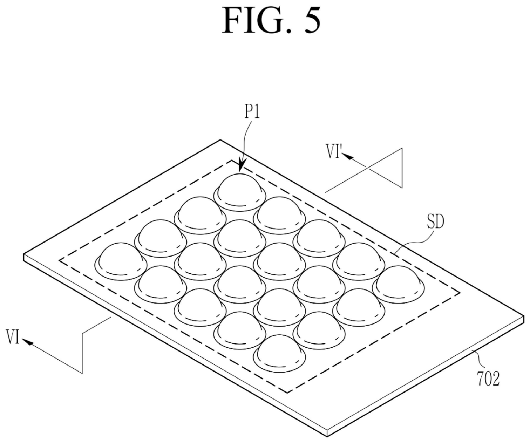

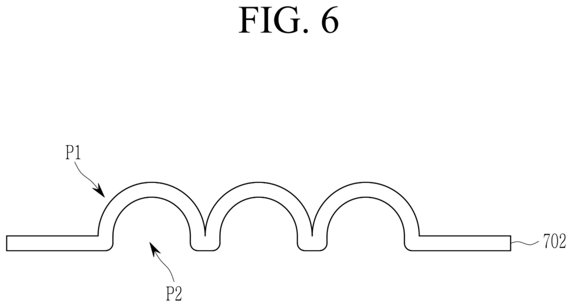

FIG. 4 and FIG. 5 are schematic perspective views illustrating a portion of an electrode according to other example embodiments of the present disclosure. FIG. 6 is a cross-sectional view taken along line VI-VI' of FIG. 5.

As shown in FIG. 4, a planar shape of the protrusion P1 formed in the electrode 701 according to another example embodiment of the present disclosure may be a polygonal shape such as, e.g., a square, may protrude to have a polygonal column shape, and may have a hollow inside. As shown in FIG. 4, the diameter of the protrusion having a polygonal planar shape may be the longest diagonal length, and the diagonal length of the protrusion may be in a range of about 0.1 mm to about 10 mm.

As shown in FIG. 3, when the protrusion P1 is formed by pressing the protruding pattern P3, stress may be concentrated on edges or corners, and thus the electrode may be torn, and thus the edges and corners of the protruding pattern P3 may be folded or chamfered. Therefore, when the protrusion P1 has a polygonal plane shape such as a square, corners and edges of the protrusion P1 may have curved surfaces.

Additionally, the cross-section of the protrusion P1 may have a trapezoidal shape (not shown) having an inclined surface with respect to one side of the electrode.

Referring to FIG. 5 and FIG. 6, the planar shape of the protrusion P1 formed in the electrode 702 in accordance with another example embodiment of this disclosure may be continuously, or substantially continuously, formed in a circular shape. That is, the protrusions P1 illustrated in FIG. 1 are spaced apart from each other with spacing L, but the protrusions P1 illustrated in FIGS. 5 and 6 may be continuously, or substantially continuously, positioned without being spaced apart from each other.

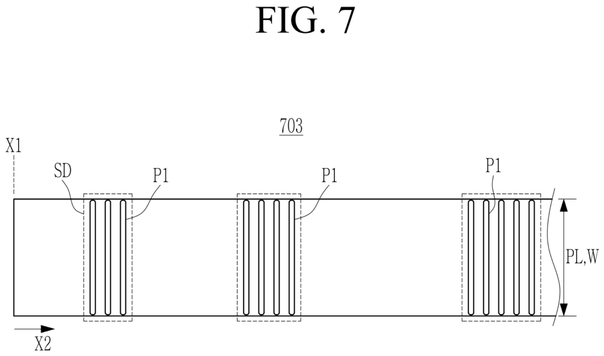

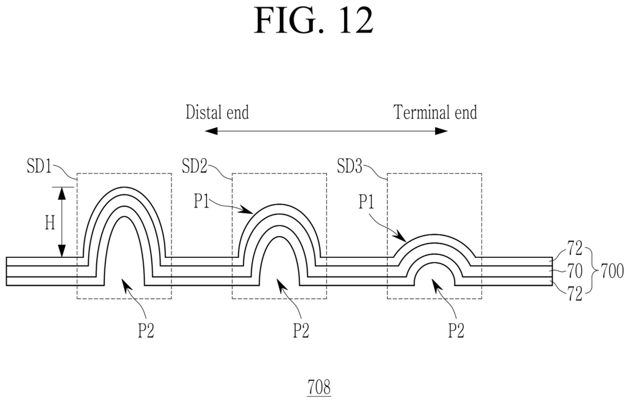

FIG. 7 to FIG. 11 are schematic plan views of electrodes according to other example embodiments of the present disclosure, and FIG. 12 is a schematic cross-sectional view of an electrode according to another example embodiment of the present disclosure.

As illustrated in FIG. 7 to FIG. 10, a planar shape of the protrusion P1 formed in the electrodes 703, 704, 705, and 706 according to another example embodiment of this disclosure may be formed in a linear shape (or a rectangle shape having a length in one direction) with a predetermined or desired width. The protrusion P1 may have a shape having a long length in the winding axis X1 direction or the winding direction X2. Hereinafter, the protrusion P1 is referred to as a linear protrusion for convenience of explanation. When a part having a relatively short length is defined as a width, the width of the linear protrusion may be the same as the diameter of the circular or polygonal protrusion described above.

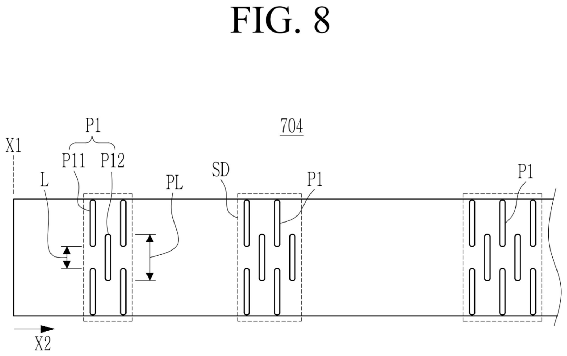

The protrusion P1 formed in electrodes 703, 704 of FIG. 7 and FIG. 8 may have a long length in the same direction as the winding axis X1, and as shown in FIG. 3, the edges and the corners may be formed in curved surfaces.

In order to hinder or prevent electrodes 703, 704 from being torn due to the concentration of pressure at the ends of the protrusions P1, the ends of the protrusions P1 may extend to the edges of the electrodes 703 and 704. In FIG. 7, the length PL of the protrusion P1 may be equal to the width W of the electrode 703.

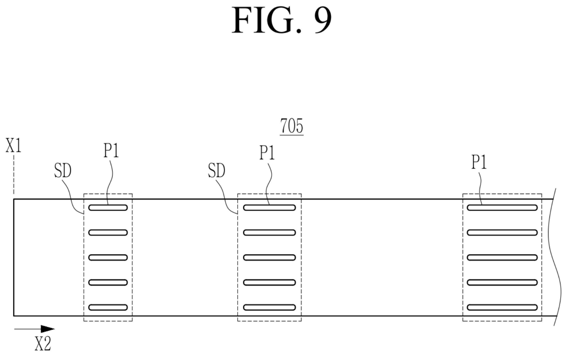

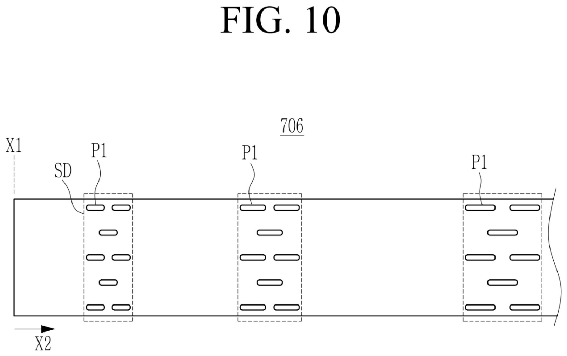

The protrusions P1 formed in electrodes 705 and 706 of FIG. 9 and FIG. 10 may have a long length in the same direction as the winding direction X2.

The protrusion P1 may be continuously, or substantially continuously, formed in the length direction as shown in FIG. 7 and FIG. 9 but is not limited thereto, and may be discontinuously broken in the length direction as shown in FIG. 8 and FIG. 10.

Hereinafter, the winding direction X2 of FIG. 7 and FIG. 8 is referred to as the width direction of the protrusion P1, and the winding axis X1 direction of FIG. 9 and FIG. 10 is referred to as the width direction of the protrusion P1.

Referring to FIG. 8 and FIG. 10, the protrusion P1 may be formed in a non-continuous manner, and an end portion thereof may be positioned along the winding direction X2. In this case, when the end portion of the protrusion P1 is positioned on the same line in the width direction, the protrusion P1 may be torn due to the pressure applied during the manufacturing process. Therefore, the end portions of the neighboring protrusions P1 may be disposed to be staggered so that the end portions of the neighboring protrusions P1 in the width direction are not located on the same line in the width direction.

In FIG. 8, when the first linear protrusion P11 and the second linear protrusion P12 are referred to in the order in which they are formed in the width direction (or the winding direction), the second linear protrusion P12 may correspond to the broken portion of the first linear protrusion P11. In this case, the length PL of the second linear protrusion P12 may be greater than the spacing L between the adjacent first linear protrusions P11. Accordingly, since the end portion of the first linear protrusion P11 and the end portion of the second linear protrusion P12 are not positioned on the same line in the width direction, the end portion of the first linear protrusion P11 faces the side wall of the second linear protrusion P12, thereby reducing the stress concentration at the end portion of the linear protrusion P11, P12, and hindering or preventing the electrode from being damaged.

In another example embodiment of the present disclosure, the spacer of the electrode may have variations in the height, diameter, or spacing between protrusions P1 from the distal end to the terminal end of the electrode.

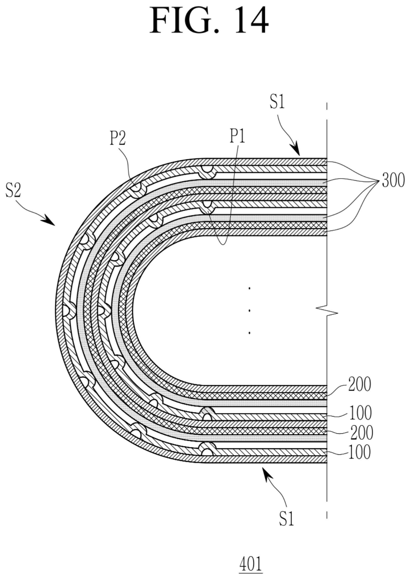

The electrode assembly illustrated in FIG. 13 and FIG. 14 described below is formed by pressing a cylindrical electrode assembly after winding. When pressurizing a cylindrical electrode assembly after winding, the pressure applied to the center of the electrode assembly, where the distal end is located, may differ from the pressure applied to the outer region of the electrode assembly, where the terminal end is located, and the protrusion P1 positioned at the center may be required to withstand greater pressure. Accordingly, the size of the protrusion P1 may be differently formed according to the difference in pressure applied to the center and the outside.

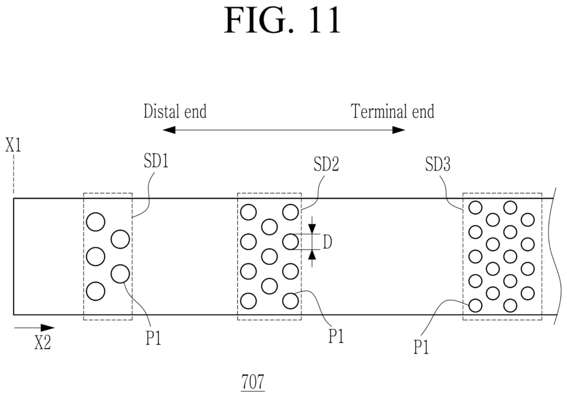

When the pressure applied to the center is greater than the outside, as shown in the electrode 707 of FIG. 11, the size, i.e., the diameter D of the protrusion P1 in the spacer SD1 located relatively closer to the distal end may be made larger than the size, or diameter, of the spacer SD2 or SD3 located closer to the terminal end, thereby increasing the rigidity thereof.

Alternatively, as in the electrode 708 shown in FIG. 12, the height H of the protrusion P1 may decrease from the distal end toward the terminal end thereof.

Since the height H of the protrusion P1 may be changed by pressure applied during the pressing process, the height of the protrusion of the spacer SD1 positioned at a center having a relatively large pressure may be higher than the height of the protrusion of the spacer SD2 or SD3 positioned at the outside having a relatively small pressure. Therefore, even if (when) the protrusion P1 is deformed by pressurization, a constant, or substantially constant, height may be maintained. In FIG. 12, only one protrusion P1 is illustrated in each spacer for convenience of description.

In addition, since the electrolyte may not move smoothly as the electrolyte is located at the center of the electrode assembly, the spacing L, as illustrated in FIG. 8, between the protrusions P1 of the spacer SD1 located relatively at the center may be greater than the spacing L between the protrusion P1 of the spacer SD2 or SD3 located relatively outside (not shown).

As described above, by forming the electrode to include a spacer made of or including the protrusion (or concave portion), impregnation property of the electrolyte may be increased.

FIG. 13 and FIG. 14 are schematic cross-sectional views of an electrode assembly according to another example embodiment of the present disclosure.

As shown in FIG. 13, the electrode assembly 400 according to an example embodiment of the present disclosure may have a configuration in which a stacked body including a positive electrode 100, a negative electrode 200, and two separators 300 is wound multiple times. As shown in FIG. 1 to FIG. 12, the positive electrode 100, the negative electrode 200, and the separator 300 may all have a band shape having a long length in one direction.

The electrode assembly 400 may be formed by winding the stacked body around a winding axis and pressing the stacked body in a state where a positive electrode 100, a negative electrode 200, and a separator 300 are laminated. Therefore, the electrode assembly 400 may include a flat rectangular central portion S1 and curved portion S2 positioned on both sides of the central portion S1 in the form of a pressed and flat jelly roll. The curved portion S2 may have a semicircular shape.

Meanwhile, the positive electrode 100 may be or include any one of the electrodes shown in FIG. 1 to FIG. 12. Accordingly, the positive electrode 100 may include a plurality of spacers in which the protrusion P1 and the concave portion P2 are formed, and the spacer may be located in the curved portion S2.

The positive electrode 100 may include a positive electrode substrate, and an active material layer formed on the positive electrode substrate. The positive electrode substrate may be formed of or include a thin conductive metal plate and used as a current collector, for example, aluminum.

The positive electrode active material layer may be formed on one surface, or on both surfaces, of the positive electrode substrate, respectively. The positive active material layer may include a positive active material, and may further include a binder and/or a conductive material. The content of the positive active material of the positive active material layer may be in a range of about 90 wt% to about 99.5 wt% based on 100 wt% of the positive active material layer, and an content of the binder and the conductive material may be in a range of about 0.5 wt% to about 5 wt% based on 100 wt% of the positive active material layer.

### Positive active material

As a positive active material, a compound (lithiated intercalation compound) capable of reversible intercalation and deintercalation of lithium may be used. For example, at least one complex oxide of lithium and a metal such as or including at least one of cobalt, manganese, nickel, and combinations thereof may be used.

The above complex oxide may be or include a lithium transition metal complex oxide, and examples thereof include at least one of lithium nickel-based oxide, lithium cobalt-based oxide, lithium manganese-based oxide, lithium iron phosphate-based compound, cobalt-free nickel-manganese-based oxide, or a combination thereof.

As an example, a compound represented by any one of the following chemical formulas may be used. LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}O_{α} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); LiₐFePO₄ (0.90≤a≤1.8).

In the chemical formula above, A is or includes at least one of Ni, Co, Mn, or a combination thereof; X is or includes at least one of Al, Ni, Co, Mn, Cr, Fe, Mg, Sr, V, a rare earth element, or a combination thereof; D is or includes at least one of O, F, S, P, or a combination thereof; G is or includes at least one of Al, Cr, Mn, Fe, Mg, La, Ce, Sr, V, or a combination thereof; and L1 is or includes at least one of Mn, Al, or a combination thereof.

For example, the positive active material may be or include a high-nickel positive active material in which the nickel content is 80 mol% or more, 85 mol% or more, 90 mol% or more, 91 mol% or more, or 94 mol% or more and 99 mol% or less, based on 100 mol% of metal excluding lithium in the lithium transition metal complex oxide. High-nickel positive active materials may achieve high capacity and can be applied to high-capacity, high-density lithium rechargeable batteries.

### Binder

The binder adheres the positive active material particles to each other, and also adheres the positive active material to the current collector. Representative examples of binders include, but are not limited to, at least one of polyvinyl alcohol, carboxymethyl cellulose, hydroxypropyl cellulose, diacetyl cellulose, polyvinyl chloride, carboxylated polyvinyl chloride, polyvinyl fluoride, polymers containing ethylene oxide, polyvinyl pyrrolidone, polyurethane, polytetrafluoroethylene, polyvinylidene fluoride, polyethylene, polypropylene, styrene-butadiene rubber, (meth)acrylated styrene-butadiene rubber, epoxy resin, (meth)acrylic resin, polyester resin, nylon, and the like.

### Conductive material

The conductive material may provide conductivity to the electrode, and any material that does not cause chemical changes and is electronically conductive may be used in the battery being constructed. Examples of conductive materials include carbon-based materials such as or including at least one of natural graphite, artificial graphite, carbon black, acetylene black, Ketjen black, carbon fibers, carbon nanofibers, and carbon nanotubes; metal-based materials containing at least one of copper, nickel, aluminum, and silver in the form of metal powder or metal fibers; conductive polymers such as polyphenylene derivatives; or mixtures thereof.

Generally, as the thickness of the active material layer, the filling density, and the loading level increase, the impregnation property of the electrolyte may deteriorate. In addition, when pressing after winding the electrode assembly, a greater pressure may be applied to the curved portion S2 than to the central portion S1, and thus the positive electrode 100, the negative electrode 200, and the separator 300 may be more closely attached to each other, and electrolyte impregnation property may be degraded. In addition, since the electrolyte is not supplied sufficiently in the curved portion S2 compared to the central portion S1, side reactions increase, which may lead to an increase in lithium precipitate.

In the present disclosure, a spacer having a protrusion P1 and a concave portion P2 is formed so that the spacing between the electrodes is maintained even when pressurized. Due to pressurization, the height of the protrusion P1 of the spacer SD may decrease, but even if (when) the pressure increases, the electrodes located on the curved portion S2 do not come into close contact with each other, and the protrusion P1 maintains a constant height so that the space between the positive electrode and the separator (or negative electrode) may have a lifted shape. Due to pressurization, the height of the protrusion P1 may be reduced by about 0.1 mm to about 0.5 mm.

In one example embodiment of the present disclosure, by forming a spacer, a space is formed between the separator 300 and the positive electrode 100, thereby providing a path for the electrolyte to be impregnated, and increasing the movement speed of the electrolyte. Additionally, the concave portion P2 between the protrusions P1 of the spacer may provide a space where the electrolyte can remain. Accordingly, the electrolyte impregnation property in the curved portion S2 may be improved, and the charge/discharge function can be improved by reducing or suppressing the formation of precipitates in the curved portion S2.

The negative electrode 200 includes a negative substrate and an active material layer formed on the negative substrate. The negative substrate is formed of or include a thin conductive metal plate and used as a current collector, and may be or include, for example, copper.

The negative active material layer may be formed on one side, or on both sides, of the substrate. The content of the negative active material in the negative active material layer may be in a range of about 95 wt% to about 99 wt% with respect to the total weight of the negative active material layer.

The negative active material may include a binder, and may optionally further include a conductive material. The content of the binder in the negative active material may be in a range of about 1 wt% to about 5 wt% with respect to the total weight of the negative active material. In addition, when the conductive material is further included, the negative active material may be used in an amount in a range of about 90 wt% to about 98 wt%, the binder in an amount in a range of about 1 wt% to about 5 wt%, and the conductive material in an amount in a range of about 1 wt% to about 5 wt%.

### Negative active material

The negative active material includes at least one of a material capable of reversibly intercalating/deintercalating lithium ions, lithium metal, an alloy of lithium metal, a material capable of doping and dedoping lithium, or a transition metal oxide.

The material capable of reversibly intercalating/deintercalating the lithium ions may be or include a carbon-based negative active material, for example, crystalline carbon, amorphous carbon, or a combination thereof. Examples of crystalline carbon include graphite such as natural graphite or artificial graphite in an amorphous, plate-like, flake-like, spherical or fibrous form, and examples of amorphous carbon include at least one of soft carbon or hard carbon, mesophase pitch carbide, calcined coke, and the like.

As the lithium metal alloy, an alloy of lithium and a metal such as or including at least one of Na, K, Rb, Cs, Fr, Be, Mg, Ca, Sr, Si, Sb, Pb, In, Zn, Ba, Ra, Ge, Al and Sn can be used.

As the material capable of doping and dedoping the lithium, a Si-based negative active material or a Sn-based negative active material may be used. The Si-based negative active material may be or include at least one of silicon, a silicon-carbon composite, silicon oxide (SiOx, 0<x≤2), a Si-Q alloy (wherein Q is or includes at least one of an alkali metal, an alkaline earth metal, a Group 13 element, a Group 14 element (excluding Si), a Group 15 element, a Group 16 element, a transition metal, a rare earth element, and combinations thereof), or a combination thereof. The Sn-based negative active material may be or include at least one of Sn, SnO2, a Sn-based alloy, or a combination thereof.

The silicon-carbon composite may be or include a composite of silicon and amorphous carbon. According to one example embodiment, the silicon-carbon composite may be in the form of silicon particles, and amorphous carbon coated on the surface of the silicon particles. For example, the silicon-carbon composite may include a secondary particle (core) assembled with silicon primary particles, and an amorphous carbon coating layer (shell) positioned on the surface of the secondary particle. The amorphous carbon may also be positioned between the silicon primary particles, so that, for example, the silicon primary particles may be coated with the amorphous carbon. The secondary particles may be dispersed in an amorphous carbon matrix.

The silicon-carbon composite may further include crystalline carbon. For example, the silicon-carbon composite may include a core including crystalline carbon and silicon particles, and an amorphous carbon coating layer positioned on the surface of the core.

The Si-based negative active material or Sn-based negative active material may be used in a mixture with a carbon-based negative active material.

### binder

The binder adheres the negative active material particles to each other, and also adheres the negative active material to the current collector. The binder may be or include a non-aqueous binder, an aqueous binder, a dry binder, or a combination thereof.

The non-aqueous binder may include at least one of polyvinyl chloride, carboxylated polyvinyl chloride, polyvinyl fluoride, ethylene propylene copolymer, polystyrene, polyurethane, polytetrafluoroethylene, polyvinylidene fluoride, polyethylene, polypropylene, polyamideimide, polyimide or combinations thereof.

The aqueous binder may be or include at least one of styrene-butadiene rubber, (meth)acrylated styrene-butadiene rubber, (meth)acrylonitrile-butadiene rubber, (meth)acrylic rubber, butyl rubber, fluoroelastomer, polyethylene oxide, polyvinylpyrrolidone, polyepichlorohydrin, polyphosphazene, poly(meth)acrylonitrile, ethylene propylene diene copolymer, polyvinyl pyridine, chlorosulfonated polyethylene, latex, polyester resin, (meth)acrylic resin, phenol resin, epoxy resin, polyvinyl alcohol, and combinations thereof.

When using an aqueous binder as the negative binder, a cellulose-based compound capable of imparting viscosity may be further included. As this cellulose series compound, one or more types, such as at least one of carboxymethyl cellulose, hydroxypropyl methyl cellulose, methyl cellulose, or alkali metal salts thereof, may be used in mixture. As the alkali metal, at least one of Na, K or Li may be used.

The dry binder is a polymeric material capable of being fiberized, and may be or include, for example, at least one of polytetrafluoroethylene, polyvinylidene fluoride, polyvinylidene fluoride-hexafluoropropylene copolymer, polyethylene oxide, or a combination thereof.

### Conductive material

The conductive material may provide conductivity to the electrode, and any material that does not cause chemical changes and that is electronically conductive may be used in the battery being constructed. Examples of conductive materials include carbon-based materials such as at least one of natural graphite, artificial graphite, carbon black, acetylene black, Ketjen black, carbon fibers, carbon nanofibers, and carbon nanotubes; metal-based materials containing at least one of copper, nickel, aluminum, and silver in the form of metal powder or metal fibers; conductive polymers such as polyphenylene derivatives; or mixtures thereof.

Meanwhile, in order to increase the capacity of the rechargeable battery, the silicon-based active material added to the negative active material layer has a higher energy density than the carbon-based active material, but the silicon-based active material exhibits a large volume change during the charge/discharge process. In particular, expansion in the curved portion S2 may increase the pressure applied to the electrode compared to the central portion S1, thereby increasing the formation of precipitates.

When the spacer is formed as in the present disclosure, expansion may be reduced due to a spacing formed between the protrusions and a space formed by the concave portion, and a pressure applied between the electrodes may be reduced. Accordingly, the generation of precipitates in the curved portion S 2 may be reduced or suppressed, thereby improving the charge/discharge function.

The separator 300 is positioned between the positive electrode 100 and the negative electrode 200 to physically separate the positive electrode 100 from the negative electrode 200.

The separator 300 may include a porous substrate and a coating layer including an organic material, an inorganic material, or a combination thereof located on one surface, or on both surfaces, of the porous substrate.

The porous substrate may be or include a polymer film formed of or including any one polymer such as or including at least one of polyolefins such as polyethylene and polypropylene, polyesters such as polyethylene terephthalate and polybutylene terephthalate, polyacetal, polyamide, polyimide, polycarbonate, polyether ketone, polyarylether ketone, polyetherimide, polyamideimide, polybenzimidazole, polyether sulfone, polyphenylene oxide, cyclic olefin copolymer, polyphenylene sulfide, polyethylene naphthalate, glass fiber, Teflon, and polytetrafluoroethylene, or a copolymer or mixture of two or more thereof.

The organic material may include a polyvinylidene fluoride-based polymer or a (meth)acrylic-based polymer.

The inorganic material may include inorganic particles such as or including at least one of, but not limited to, Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and combinations thereof.

The organic material and inorganic material may be mixed in one coating layer, or may be present in a form in which a coating layer including an organic material and a coating layer including an inorganic material are stacked together.

In the example embodiment, the protrusion P1 extends outward from the center of the electrode assembly, and that the concave portion P2 is open toward the center of the electrode assembly 401. However, the protrusion is not limited to thereto, and the protrusion may be formed in various directions as long as a gap between adjacent electrodes can be maintained.

FIG. 14 is an enlarged cross-sectional view of a portion of an electrode assembly according to another example embodiment of the present disclosure.

As shown in FIG. 14, an electrode assembly 401 according to another example embodiment of the present disclosure includes a positive electrode 100, a negative electrode 200, and a separator 300, and includes a central portion S1 and a curved portion S2 by being pressed after being wound. A spacer having a protrusion P1 and a concave portion P2 may be formed in the curved portion S2 of the positive electrode 100, and the protrusion P1 of the spacer may protrude from the outside of the electrode assembly toward a center thereof. Accordingly, the concave portion P2 may be opened toward the outside of the electrode assembly.

Although the spacer is formed in the positive electrode in the example embodiment, the spacer of the positive electrode may be transferred to the negative electrode while the electrode is in close contact with the electrode after the pressing process.

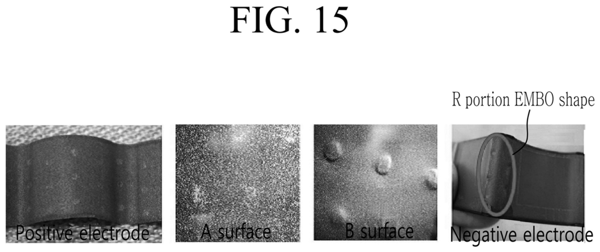

FIG. 15 is a photograph of a curved portion of an electrode assembly according to an example embodiment of the present disclosure.

As shown in FIG. 15, the protrusion is formed at the positive electrode when the electrode assembly is manufactured by being wound and then pressed as in an example embodiment of the present disclosure. Also, during the pressurization process, the protrusion of the positive electrode presses the neighboring negative electrode to form a protrusion having the same shape as the positive electrode on the negative electrode.

At this time, as the protrusion of the positive electrode presses the negative electrode, the protrusion of the positive electrode may be reduced, and the height of the protrusion formed on the negative electrode may be greater than the height of the protrusion formed on the positive electrode.

In the description, as an example, the spacer is formed only on the curved portion in order to improve the impregnation property, but the spacer is not limited thereto, and if (when) necessary, the spacer may be formed on the entire, or substantially the entire, electrode, that is, on both the curved portion and the central portion (not shown).

When a spacer is formed in both the central portion and the curved portion, the size and spacing of the protrusions formed in the central portion and the curved portion can be formed differently depending on the impregnation property in the central portion and the curved portion. Additionally, depending on the pressure transmitted during pressurization, the height of the protrusion in the central portion and the height of the protrusion in the curved portion may be different after pressurization.

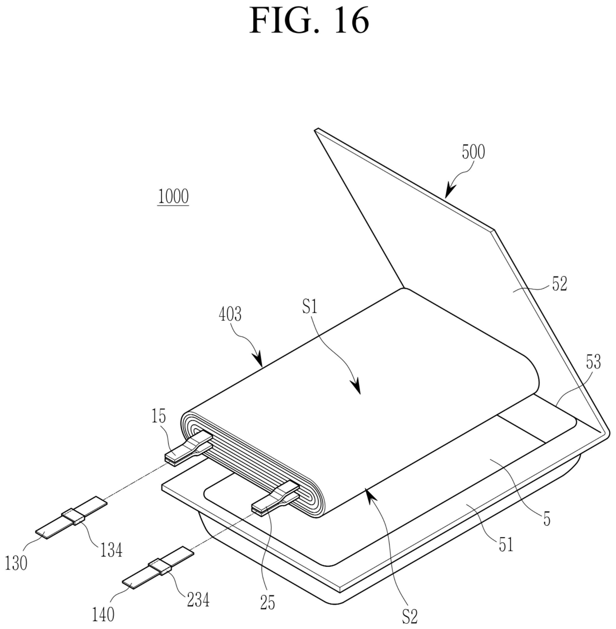

FIG. 16 is an exploded perspective view of a rechargeable battery according to an example embodiment of the present disclosure.

Referring to FIG. 16, a rechargeable battery 1000 according to the example embodiment may include an electrode assembly 403, a pouch-type case 500 that accommodates and seals the electrode assembly 403 and an electrolyte in an internal space. The electrode assembly 403 may be the electrode assembly illustrated in FIG. 13 or FIG. 14.

The electrode assembly 403 includes a positive electrode, a negative electrode, and a separator between the positive electrode and the negative electrode, and may be pressurized after winding to have a central portion S1 and a curved portion S2.

The positive and negative electrodes may be electrically connected to a positive tab 15 and a negative tab 25, respectively. A positive terminal 130 and a negative terminal 140 for drawing current outward may be connected to the positive tab 15 and the negative tab 25. In order to increase the adhesive strength of the portion where the positive terminal 130, the negative terminal 140 and the case 500 come into contact, the positive terminal 130 and the negative terminal 140 may be wrapped with an insulating film 134, 234, respectively, in the portions where they overlap with the case 500. The insulating film 134, 234 can be made of or include a polymer resin having a lower melting point than the case 500.

The internal temperature and internal pressure of a rechargeable battery 1000 may rapidly increase due to various causes, such as, e.g., rapid charging and discharging, external impact, and exposure to a high-temperature environment. In this case, the insulating films 134 and 234 may melt ,earlier than the sealed portion of the case 500 to discharge the gas in the case 500. The insulating films 134 and 234 may constitute a safety vent for discharging gas and may reduce or prevent a sudden breakdown of the rechargeable battery 1000.

The case 500 has a pouch type and includes a lower case 51 having a receiving part 5 for accommodating the electrode assembly 403 and an upper case 52 covering the lower case 51 to seal the electrode assembly 403. The lower case 51 and the upper case 52 may be integrally connected to each other, and a folding line 53 may be disposed between the lower case 51 and the upper case 52.

The case 500 may be formed of or include a laminate exterior material, and the laminate exterior material may be formed in a multilayer structure including, for example, a first insulation layer, a metal layer, and a second insulation layer. Of course, various adhesive layers or functional layers may be further added.

The first insulation layer is formed of or include a material having insulating and heat-adhesive properties on the inner surface of the laminate outer material, so that the three edges of the lower case 51 and the upper case 52 except for the folding line 53 can be sealed by heat-fusing while the electrode assembly 403 is accommodated therein. Additionally, the first insulation layer is formed on one surface of the metal layer and forms an inner surface of the laminate outer material facing the electrode assembly 403. The first insulation layer may be formed of or include casted polypropylene (CPP) or an equivalent thereof, which does not react with the electrolyte.

The electrode assembly 403 may be accommodated in the internal space of the case 500 together with the electrolyte.

The electrolyte is a medium that enables movement of lithium ions in the positive active material layer and the negative active material layer, and is charged and discharged by deintercalation and intercalation of lithium ions. When the positive electrode, the negative electrode, and the separator are sufficiently impregnated with the electrolyte, stable charge and discharge functions can be performed.

In one example embodiment of the present disclosure, by forming a spacer on the curved portion of the positive electrode, a space is formed between the protrusions and the concave portion, thereby improving the impregnation property.

The electrolyte contains a non-aqueous organic solvent and lithium salt.

The non-aqueous organic solvent acts as a medium through which ions involved in the electrochemical reaction of the battery can move.

The non-aqueous organic solvent may be or include at least one of a carbonate-based, ester-based, ether-based, ketone-based, or alcohol-based solvent, an aprotic solvent, or a combination thereof.

Examples of the carbonate-based solvent may include at least one of dimethyl carbonate (DMC), diethyl carbonate (DEC), dipropyl carbonate (DPC), methylpropyl carbonate (MPC), ethylpropyl carbonate (EPC), methyl ethyl carbonate (MEC), ethylene carbonate (EC), propylene carbonate (PC), butylene carbonate (BC), and the like.

The ester-based solvents may include at least one of methyl acetate, ethyl acetate, n-propyl acetate, dimethyl acetate, methyl propionate, ethyl propionate, decanolide, mevalonolactone, valerolactone, caprolactone, and the like.

The ether-based solvent may include at least one of dibutyl ether, tetraglyme, diglyme, dimethoxyethane, 2-methyltetrahydrofuran, 2,5-dimethyltetrahydrofuran, tetrahydrofuran, and the like.

Furthermore, as a ketone-based solvent, cyclohexanone or the like may be used. As the alcohol-based solvent, ethyl alcohol, isopropyl alcohol, and the like, may be used. As the aprotic solvent, at least one of nitriles such as R-CN (R is a linear, branched, or cyclic hydrocarbon group having 2 to 20 carbon atoms and may include a double bond, an aromatic ring, or an ether group); amides such as dimethylformamide; dioxolanes such as 1,3-dioxolane and 1,4-dioxolane; sulfolanes, and the like, may be used.

The non-aqueous organic solvents may be used alone, or in combination of two or more solvents.

In addition, when using a carbonate-based solvent, a cyclic carbonate and a chain carbonate may be mixed together, and the cyclic carbonate and the chain carbonate can be mixed in a volume ratio in a range of about 1:1 to about 1:9.

The lithium salt is a substance that dissolves in an organic solvent, and constitutes a source of lithium ions within the battery, enabling the basic operation of a lithium rechargeable battery and promoting the movement of lithium ions between the positive electrode and negative electrode. Representative examples of lithium salts may include one or more of LiPF₆, LiBF₄, LiSbF₆, LiAsF₆, LiClO₄, LiAlO₂, LiAlCl₄, LiPO₂F₂, LiCl, Lil, LiN(SO₃C₂F₅)₂, Li(FSO₂)₂N (lithium bis(fluorosulfonyl)imide (LiFSI), LiC₄F₉SO₃, LiN(CₓF₂ₓ₊₁SO₂)(C_{y}F_{2y+1}SO₂) (x and y are integers in a range from 1 to 20), lithium trifluoromethanesulfonate, lithium tetrafluoroethanesulfonate, lithium difluorobis(oxalato)phosphate (LiDFOB), lithium bis(oxalato)borate (LiBOB).

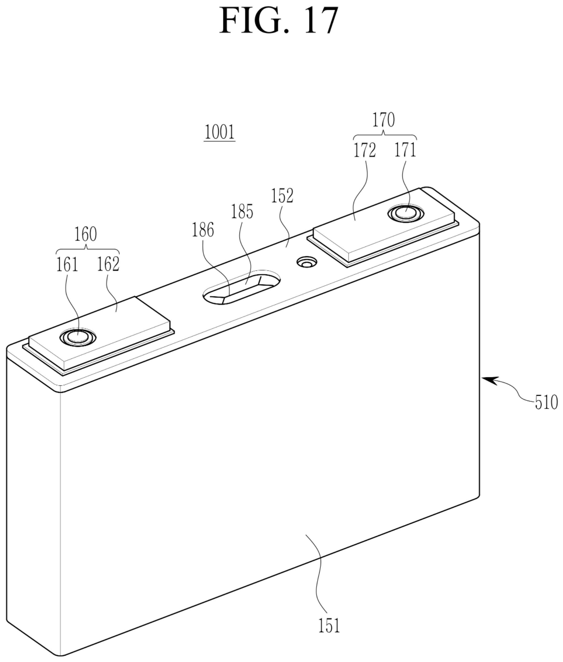

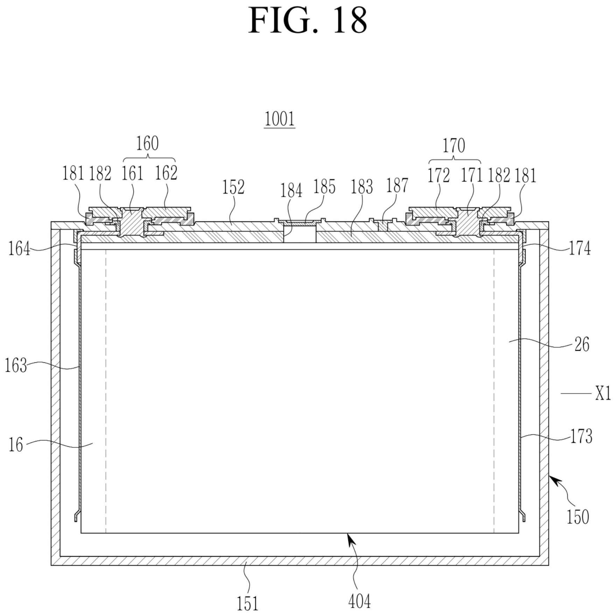

FIG. 17 is a perspective view of a rechargeable battery according to an example embodiment of the present disclosure, and FIG. 18 is a cross-sectional view of the rechargeable battery shown in FIG. 17.

Referring to FIGS. 17 and 18, a rechargeable battery 1001 according to the example embodiment may include an electrode assembly 404, a case 510 that accommodates and seals the electrode assembly 404, and an electrolyte in an internal space.

The electrode assembly 404 may be the electrode assembly illustrated in FIG. 13 or FIG. 14. By winding the positive electrode, the negative electrode, and the separator around the winding axis X1 and then applying pressure, the positive electrode can have a jelly roll shape having a central portion and a curved portion. A spacer may be formed in the curved portion S2. In one example embodiment of the present disclosure, by forming a spacer in a curved portion, the electrode assembly may be readily impregnated when the electrolyte is injected.

The case 510 may have a substantially rectangular shape, and the rechargeable battery 1001 of the example embodiment may be a square rechargeable battery.

The case 510 may include a can 151 having a concave internal space and one side open, and a cap plate 152 coupled to the can 151 to seal the can 151. The can 151 may be made of or including high-strength metal such as stainless steel. A positive terminal 160, a negative terminal 170, and a safety vent 185 may be installed on the cap plate 152.

The positive terminal 160 may include a first pillar 161 and a first terminal plate 162, and may be electrically connected to the positive electrode by a first current collecting plate 163 and a first connecting portion 164. The first current collecting plate 163 may be coupled to the positive tab 16 by a method such as, e.g., welding. The negative terminal 170 may include a second pillar 171 and a second terminal plate 172, and may be electrically connected to the negative electrode by the second current collecting plate 173 and the second connecting portion 174. The second current collecting plate 173 may be coupled to the negative tab 26 by welding or the like. The positive tab 16 and the negative tab 26 may be uncoated parts where the substrate is exposed because the active material layer is not formed in the positive electrode and the negative electrode, and may be formed along the length direction of the electrode.

Each of the positive terminal 160 and the negative terminal 170 may be insulated from the cap plate 152 by an upper insulator 181, a seal gasket 182, and a lower insulator 183. The seal gasket 182 may hinder or prevent external moisture from penetrating into the case 510, and may hinder or prevent the electrolyte in the case 510 from leaking to the outside.

A vent hole 184 may be positioned in the cap plate 152 and the lower insulator 183, and a safety vent 185 may be installed in the vent hole 184 of the cap plate 152. The safety vent 185 may be or include a metal plate having a thickness that is smaller than the thickness of the cap plate 152 and may include a notch 186 that is broken at a predetermined or desired pressure to relieve internal pressure. The stopper 187 may seal the electrolyte injection hole provided in the cap plate 152.

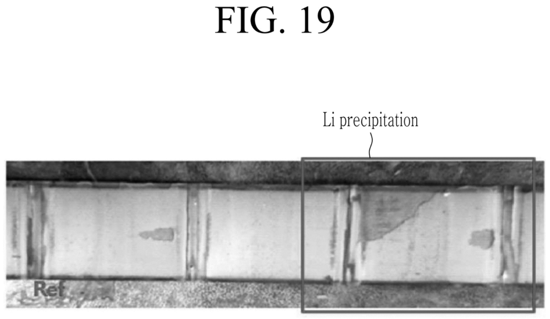

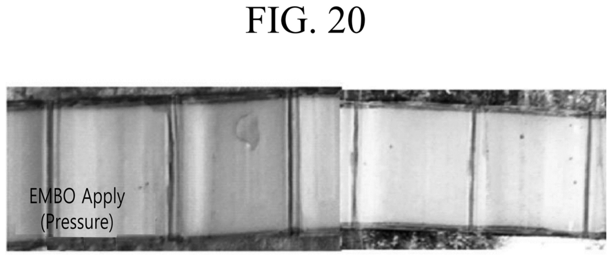

FIG. 19 is a photograph of an electrode assembly manufactured according to the related art, and FIG. 20 is a photograph of an electrode assembly manufactured according to the present disclosure.

As shown in Fig. 19, it can be confirmed that lithium is precipitated after charging and discharging in an electrode assembly according to the prior art in which a spacer is not formed.

On the other hand, as shown in Fig. 20, it may be confirmed that the electrode assembly according to the present disclosure in which a spacer is formed has reduced lithium precipitation after charge and discharge.

Although the example embodiment of the present disclosure has been described above, the present disclosure is not limited thereto, and it is possible to perform various modifications within the scope of the claims, the detailed description of the disclosure, and the accompanying drawings, and any such modifications are within the scope of the present disclosure.

### Description of symbols:

| | | | |
|---|---|---|---|
| 15, 16: | Positive tab | 25, 26: | Negative tab |
| 70: | Substrate | 72: | Active material layer |
| 100: | Positive electrode | 151: | Can |
| 152: | Cap plate | 130, 160: | Positive terminal |
| 140, 170: | Negative terminal | 185: | Safety vent |
| 200: | negative electrode | 300: | Separator |
| 400, 401, 402, 404: | Electrode assembly | | |
| 500, 510: | Case | | |
| 700, 701, 702, 703, 704, 705, 706, 707, 708: | Electrode | | |
| 1000, 1001: | Rechargeable battery | | |
| P1: | Protrusion | P2: | Concave portion |
| S1: | Central portion | S2: | Curved portion |

## Claims

1. An electrode (700) comprising:
a strip-shaped substrate (70) extending in one direction;
an active material layer (72) formed on at least one side of the substrate (70); and
a spacer (SD) having a plurality of protrusions (P1) in which the substrate (70) and the active material layer (72) are raised together.

2. The electrode of claim 1, wherein:
an inside of at least one of the protrusions (P1) is an empty space of which one side is open.

3. The electrode of claim 1 or 2, wherein:
a plane shape of at least one of the protrusions (P1) is one of circular and polygonal.

4. The electrode of claim 3, wherein:
a diameter of the at least one of the protrusions (P1) is in a range from about 0.1 mm to about 6 mm when the plane shape of the protrusion is circular, and a length of the diagonal of the at least one of the protrusions (P1) is in a range from about 0.1 mm to about 10 mm when the plane shape of the protrusion is polygonal,
optionally wherein the at least one of the protrusions (P1) is hemispherical.

5. The electrode of claim 3, wherein:
the at least one of the protrusions (P1) is a polygonal prism, and
a corner and an edge of the polygonal prism are curved surfaces.

6. The electrode of claim 1 or 2, wherein a planar shape of at least one of the protrusions (P1) is a rectangle with a long length in one direction,
optionally wherein a width of the rectangle is in a range from about 0.1 mm to about 10mm,
optionally wherein the rectangle is formed discontinuously along the one direction,
optionally wherein:
ends of the protrusions (P1) adjacent to each other in the width direction of the rectangle are shifted from each other.

7. The electrode of any of claims 1-6, wherein:
a height of the protrusions (P1) is one half or less of a diameter of the protrusions (P1), and
a spacing between the protrusion is about 0.5 mm or more.

8. The electrode of any of claims 1-7, wherein:
a plurality of spacers (300) are formed along one direction.

9. An electrode assembly (400, 401, 402, 404) comprising:
a separator (300), and
a first electrode (100) and a second electrode (200), which are positioned with the separator (300) interposed therebetween and are wound together with the separator (300) and pressed,
wherein the first electrode (100) comprises an electrode (700) according to any of claims 1-8.

10. The electrode assembly of claim 9, further comprising:
a pair of facing central portions (S1) and a pair of curved portions (S2) connecting the ends of the central portions (S1),
wherein the spacer (300) is positioned on at least one of the curved portions (S1).

11. The electrode assembly of claim 10, wherein an area of the spacer (300) varies depending on the area of the at least one of the curved portions (S1).

12. The electrode assembly of any of claims 9-11, wherein:
the spacer (300) is formed on substantially the entire first electrode (100) on which the active material layer (72) is formed.

13. The electrode assembly of any of claims 9-12, wherein:
at least one of a diameter, a height of the protrusion, and a spacing between the protrusions positioned relatively in a center of the electrode assembly is different from a diameter, a height of the protrusion, and a spacing between the protrusions positioned in a relatively outward portion of the electrode assembly.

14. The electrode assembly of any of claims 9-13, wherein:
the second electrode (200) comprises an electrode (700) according any of claims 1-8,
optionally wherein the spacer (300) formed on the second electrode (200) being formed at substantially the same position as the spacer (300) formed on the first electrode (100).

15. The electrode assembly of any of claims 9-14, wherein:
a height of a protrusion formed in the first electrode (100) is different from a height of a protrusion formed in the second electrode (200).
